(19) Europäisches Patentamt
European Patent Office
Office européen des brevets

(11) Publication number: **0 037 291**
**B1**

(12) **EUROPEAN PATENT SPECIFICATION**

(45) Date of publication of patent specification: **07.08.85**

(51) Int. Cl.$^4$: **C 08 F 297/08**

(21) Application number: **81301448.7**

(22) Date of filing: **02.04.81**

# (54) Improved process for the production of a propylene-containing block copolymer.

(30) Priority: **02.04.80 JP 41999/80**

(43) Date of publication of application:
**07.10.81 Bulletin 81/40**

(45) Publication of the grant of the patent:
**07.08.85 Bulletin 85/32**

(84) Designated Contracting States:
**AT DE FR GB IT NL**

(56) References cited:
**FR-A-2 348 231**
**NL-A-7 903 979**

**JAPANESE ABSTRACTS, vol. 3, nr. 157 (C-68), December 22, 1979 page 103 C 68**
**CHEMICAL ABSTRACTS, vol. 92, no. 10, March 1980 page 16, abstract 77147k Columbus, Ohio, US**

(73) Proprietor: **MITSUI PETROCHEMICAL INDUSTRIES, LTD.**
**2-5, Kasumigaseki 3-chome Chiyoda-ku**
**Tokyo 100 (JP)**

(72) Inventor: **Toyota, Akinori**
**13-10, Yamate-cho 1-chome**
**Iwakuni-shi Yamaguchi-ken (JP)**
Inventor: **Kashiwa, Norio**
**55-18, Midoro-cho 2-chome**
**Iwakuni-shi Yamaguchi-ken (JP)**

(74) Representative: **Myerscough, Philip Boyd et al**
**J.A.Kemp & Co. 14, South Square Gray's Inn**
**London, WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 037 291 B1

**Description**

This invention relates to a process suitable for continuous operation which can give, in good yields and with a good reproducibility of quality, a propylene-containing block copolymer having excellent rigidity, impact strength and gloss represented by its flexural modulus, falling dart impact strength ($FD^{-10°C}$) and surface gloss in good balance.

In order to improve the low-temperature strength of polypropylene, attempts have previously been made to produce a block copolymer by a multi-step process which comprises forming a propylene polymer (in the present application, the term "propylene polymer" sometimes denotes a copolymer consisting mainly of propylene units as well) in a first step, and forming a propylene-ethylene copolymer and/or polyethylene in a second and subsequent steps. By such a process, however, it is difficult to produce a block copolymer (i.e. a polymer composition obtained by block copolymerization) having satisfactory properties in a well-balanced combination in good yields and with a good reproducibility of quality by a stable operation.

Some of these prior attempts are directed to the production of a propylene-containing block copolymer by a combination of a step (I) of polymerizing propylene in suspension in the presence of a catalyst, and a step (II) of copolymerizing propylene with another α-olefin in the gaseous phase in the presence of the catalyst-containing propylene polymer obtained in step (I).

For example, Japanese Patent Publication No. 17487/1967 (corresponding to British Patent No. 1,010,627) discloses a process which comprises polymerizing an olefinic unsaturated hydrocarbon in the presence of polymer particles formed in advance from an olefinic unsaturated hydrocarbon and maintained in the fluidized state by gaseous streams using a catalyst prepared outside the fluidized bed from a trihalide of titanium and/or vanadium and an alkyl aluminum compound, wherein the catalyst as a suspension in an inert medium is contacted with the olefinic unsaturated hydrocarbon to form a polymer, thereafter the catalyst suspension containing the polymer is introduced into the fluidized bed, and the polymerization is carried out while maintaining the fluidized state of the fluidized bed by utilizing the abrupt vaporization of the inert medium.

Japanese Patent Publication No. 13049/1978 (corresponding to British Patent No. 1,058,358) discloses a gaseous-phase continuous and consecutive process for producing a block copolymer which comprises introducing a catalyst-containing polymer of an α-olefin ($C_3$ or higher) formed in advance into one end of a continuous stirred reaction zone, introducing an α-olefin monomer to the reaction zone through a feed line to contact it with the catalyst-containing α-olefin polymer, continuously moving the polymer and the monomer from the introduction end to a discharge end of the reaction zone while maintaining them in contact with each other, and withdrawing from the reaction zone a block copolymer containing the copolymerized α-olefin monomer in an amount of 1 to 40% based on the weight of the polymer.

Japanese Patent Publication No. 26113/1972 discloses a process which comprises polymerizing propylene in an amount corresponding to 80 to 95% of the final polymer composition to be obtained in liquid propylene substantially free from an inert medium in the presence of a Ziegler-Natta catalyst, particularly that containing titanium trichloride (AA) obtained by reducing titanium tetrachloride with aluminum as a titanium catalyst component and optionally an electron donor, removing the unreacted propylene, transferring the catalyst-containing crystalline polypropylene powder to a second reactor equipped with an internal cooling device, feeding ethylene gas or a gaseous mixture of ethylene and propylene into the second reactor from its bottom so that the polypropylene powder is maintained in the fluidized state, and block copolymerizing them in an amount corresponding to the remaining 20 to 5% based on the final polymer composition.

Japanese Patent Publication No. 14862/1974 discloses a process which comprises polymerizing an α-olefin in bulk in the substantial absence of a solvent using a Ziegler-type catalyst, particularly that containing titanium trichloride (AA) as a titanium catalyst component, and subsequently polymerizing the same olefin in the gaseous phase in a second step and if required in a third step.

Japanese Laid-Open Patent Publication No. 135987/1976 (corresponding to British Patent No. 1,532,231) discloses a two-step polymerization process using a Ziegler-type catalyst containing titanium trichloride as a titanium catalyst component and optionally containing a Lewis base compound, wherein a part of the liquid olefin monomer layer in the first-step reaction product mixture is separated from the solid olefinic polymer in the product, and the first-step reaction product mixture is fed to a second-step reaction as a concentrated mixture having a higher solid olefin polymer content than the first-step reaction product mixture.

These prior patent documents do not at all disclose the use of the highly active solid titanium catalyst component (A) mentioned below, much less the use of a catalyst composed of the catalyst component (A) and the catalyst components (B) and (C) mentioned hereinbelow. They neither describe nor suggest the combination of parameters (i) and (ii) described below.

Japanese Laid-Open Patent Publication No. 123191/1979 discloses a process for producing a block copolymer of propylene which comprises homopolymerizing propylene or copolymerizing propylene with another unsaturated hydrocarbon monomer in a first step to an extent of at least 60% based on the final polymer composition obtained and subsequently copolymerizing propylene with another unsaturated hydrocarbon monomer in a second step, wherein the first step is carried out in the substantial absence of

an inert solvent at such temperatures and pressures as to maintain propylene in the liquid phase while maintaining the reaction system in the fluidized state, and the second step is carried out at such temperatures and pressures as to maintain propylene and the other unsaturated hydrocarbon monomer in the gaseous state while maintaining the reaction system in the fluidized state. This process, however, has operational and equipment disadvantages in that the first step should also be performed under such conditions as to form a fluidized layer. The Patent Publication states that a very broad range of titanium catalyst components which may include the titanium catalyst component (A) can equally be used, but all of the specific examples given in this Patent Publication do not at all use such a titanium catalyst component. Of course, this Patent Publication does not touch upon the use of the specified catalyst of the present invention composed of the highly active solid titanium catalyst component (A) and the catalyst components (B) and (C) and the combination of parameters (i) and (ii) and the excellent improvements achieved by using them.

Japanese Laid-Open Patent Publication No. 133587/1979 discloses a process for producing a block copolymer in two steps which involves using a catalyst which may embrace a catalyst composed of the aforesaid components (A), (B) and (C). But it fails to disclose anything about the use of the combination of parameters (i) and (ii) specified in the present invention and the excellent improvements achieved by using the combination parameters. Example 3 of this patent document which is the only example showing the use of such a catalyst describes a process which does not include the parameter (i) in the above combination. As will be shown hereinbelow by Comparative Example 2, such a process cannot lead to the excellent improvement achieved by the present invention.

The present inventors noted that the prior suggested process comprising a combination of (I) a step of polymerizing propylene in suspension and (II) a step of polymerizing propylene and another α-olefin in the gaseous phase in the presence of the catalyst-containing polymer formed in step (I) cannot produce a block copolmer of satisfactory properties in good yields and with a good reproducibility of quality by an easy operation. They have made extensive investigations in order to provide a process for producing a block copolymer which is free from the disadvantage of the prior process.

These investigations have led to the discovery that by a combination of a step (I) of polymerizing propylene or propylene with up to 5 mole% of another olefin (ethylene and/or an α-olefin of at least 4 carbon atoms) in suspension using a catalyst composed of the components (A), (B) and (C) and a step (II) of polymerizing propylene and at least one other olefin (ethylene and/or an α-olefin having at least 4 carbon atoms) in the presence of the catalyst-containing polymer obtained in step (I), said multi-step polymerization being carried out under such conditions as to satisfy the parameters (i) and (ii) described below, a block copolymer having excellent properties such as rigidity, impact strength and gloss in a well-balanced combination can be produced in a high yield with a good reproducibility of quality by a stable operation without the need to perform a deashing treatment or a treatment for removing atactic polypropylene.

It has also been found that the copolymer can be obtained in the form of particles which permit omission of a pelletizing step in some applications.

It has further been found that the use as component (A) of a solid titanium catalyst component having an average particle size of 1 to 200 μm with the geometrical standard deviation ($\sigma g$) of its particle size being less than 2.1 very advantageously serves to avoid operational troubles so that the reaction may be carried out smoothly with a good reproducibility of quality without agglomeration or poor dispersion of the resulting polymer.

Moreover, it has been found that by performing the suspension polymerization of step (I) under such conditions that the amount of propylene in the liquid phase of the polymerization system is not less than about 50% based on the weight of the liquid phase, the operation can be especially advantageously performed in switching over to the gas-phase copolymerization step (II).

In addition, it has been found that a polymer having a particle size and a particle size distribution which are especially suitable for gas-phase copolymerization can be formed by performing the suspension polymerization of step (I) such that a propylene polymer having a boiling n-heptane insoluble portion content of not less than 90% by weight and an n-decane-soluble portion content at 23°C of not more than 5% by weight is formed in an amount of not less than 5000 g per millimole of titanium, and such a polymer has flowability suitable for performing the gaseous phase polymerization step (II) more smoothly.

It has further been found that it is useful for further improvement of the quality of the resulting propylene-containing block copolymer to perform the gas-phase copolymerization of step (II) such that there is formed a propylene-containing block copolymer having propylene content in a portion soluble in n-decane at 23°C, of 20 to 80 mole% and an intrinsic viscosity, measured in decalin at 135°C, of 1.8 to 6 dl/g.

According to the invention there is thus provided a multi-step process for the production of a propylene-containing block copolymer which comprises

(I) polymerizing propylene, either alone or with up to 5 mole% of another olefin, by suspension polymerization in the presence of a catalyst composed of

(A) a highly active solid titanium catalyst component containing magnesium, titanium, halogen and an electron donor as essential ingredients,

(B) an organoaluminum compound, and

(C) an electron donor, and

(II) copolymerizing propylene with at least one olefin by gas-phase polymerization in the presence of the catalyst-containing polymer obtained in step (I);

characterised in that

(i) step (I) is carried out under such conditions that the ratio of gram atoms of Al in catalyst component (B) to moles of the electron donor in the catalyst component (C) is from 1:1 to 15:1, and

(ii) after the amount of the polymer formed in step (I) reaches 70% of that of the polymer finally obtained in step (I), component (B) or both components (B) and (C) are freshly added in such an amount that the ratio of gram atoms of Al freshly added to the total number of moles of electron donor in the polymerization or copolymerization system is from 0.1:1 to 20:1, and thereafter the polymerization or copolymerization is carried out in the further presence of the component (B) or the components (B) and (C) so added.

Step (I) and/or step (II) of this process can be carried out in at least two stages.

In the catalyst component (A), preferably the Mg/Ti atomic ratio is from 2/1 to 100/1, more preferably from 4/1 to 70/1; the halogen/Ti atomic ratio preferably is from 4/1 to 100/1, more preferably from 6/1 to 40/1; and the electron donor/Ti mole ratio preferably is from 0.2/1 to 10/1, more preferably from 0.4/1 to 6/1.

The specific surface area of the catalyst component (A) is preferably at least 3 $m^2/g$, more preferably at least 40 $m^2/g$, especially preferably from 100 $m^2/g$ to 800 $m^2/g$. Usually, such a solid titanium catalyst component (A) does not permit liberation of the titanium compound by a simple procedure such as washing with hexane at room temperature. Usually, the X-ray spectrum of the catalyst component (A) shows amorphousness irrespective of the starting magnesium compound used in catalyst preparation, for example it is in the more amorphous state than an ordinary commercial grade magnesium dihalide which shows high crystallinity.

The solid titanium catalyst component (A) has an average particle size of preferably 1 to 200 μm, more preferably 5 to 100 μm, especially preferably 8 to 50 μm, and the geometrical standard deviation ($\sigma g$) of the particle size distribution is less than 2.1, preferably not more than 1.95.

The particle size distribution of the titanium catalyst component (A) is determined by a light transmission method. Specifically, the catalyst component (A) is diluted with an inert solvent such as decalin to a concentration of 0.01 to 0.5%, and put into a measuring cell. Narrow light rays are applied to the cell, and the intensity of light passing through the liquid while the particles are sedimenting is continuously measured, and the particle size distribution of the particles is measured. The standard deviation ($\sigma g$) can be calculated by a logarithmic normal distribution function on the basis of the particle size distribution. The average particle size of the catalyst is the weight average diameter.

If the average particle diameter, of the component (A) is smaller than the specified range, the polymer tends to be agglomerated, or poor dispersion of the polymer in the polymerization reactor tends to occur. Accordingly, the polymerization system may become non-uniform and the discharging of the polymer may become difficult, thus causing troubles to the continuous smooth performance of block copolymerization. When the average particle diameter of the component (A) is larger than the above-specified range, the polymer tends to be dispersed poorly or become non-uniform.

If the geometrical standard deviation ($\sigma g$) of the particle size distribution of the catalyst component (A) is larger than the specified limit, the polymer may be agglomerated, or become non-uniform in the polymerization system and the polymerization temperature and the composition of the polymer become non-uniform. These factors may adversely affect the operation of the process and the quality of the polymer.

Preferably, the titanium catalyst component (A) is in well-defined shape, for example in the form of a sphere, ellipse, scale or granule.

The highly active solid titanium catalyst component (A) may contain other elements, metals or functional groups, in addition to the aforesaid essential ingredients, or may be diluted with an inorganic or organic diluent.

Preferably, the titanium catalyst component (A) has such high performance as can give a highly stereospecific propylene polymer in an amount of at least 5000 g per millimole of titanium in the suspension polymerization step (I).

The solid titanium catalyst component (A) which meets all of the aforesaid preferred conditions can be obtained by known methods, for example a method which comprises using a magnesium compound having an average particle diameter and a particle size distribution within the aforesaid ranges, or a method which comprises contacting a liquid magnesium compound with a liquid titanium compound and adjusting the size of the catalyst to the aforesaid average particle diameter and particle size distribution during catalyst preparation. Such techniques are disclosed, for example, in Japanese Patent Applications

Nos. 43002/1979, 43003/1979, and 75582/1979 (corresponding to German Laid-Open Patent Publication No. 3,022,738).

Some embodiments of such techniques are shown below.

(1) An embodiment in which a complex of an electron donor and a magnesium compound having an average particle size of 1 to 200 µm and a geometrical standard deviation (σg) of its particle size distribution of less than 2.1, with or without pre-treatment with an electron donor and/or an organoaluminum compound or a reaction aid such as a halogen-containing silicon compound, is reacted with a titanium halide being liquid under the reaction conditions, preferably titanium tetrachloride.

(2) An embodiment in which a liquid magnesium compound having no reducing ability and a liquid titanium compound are reacted in the presence of an electron donor to precipitate a solid component having an average particle diameter of 1 to 200 µm and a geometrical standard deviation (σg) of its particle size distribution of less than 2.1, and if desired, the solid component is further reacted with a liquid titanium compound, preferably titanium tetrachloride, or with both of it and an electron donor.

Examples of the magnesium compound used in preparing the solid titanium catalyst component (A) include magnesium oxide, magnesium hydroxide, hydrotalcite, a carboxylic acid salt of magnesium, alkoxymagnesiums, aryloxymagnesiums, alkoxymagnesium halides, aryloxymagnesium halides, magnesium dihalides, organomagnesium compounds, and the reaction products of organomagnesium compounds with at least one of electron donors, halosilanes, alkoxysilanes, silanols and aluminum compounds.

The organoaluminum compounds used in preparing the titanium catalyst component (A) may be suitably selected from the organoaluminum compounds described below which can be used in polymerizing olefins.

The halogen-containing silicon compounds include, for example, silicon tetrahalides, silicon alkoxyhalides, silicon alkylhalides and halopolysiloxanes.

Examples of the titanium compound used in the preparation of the solid titanium catalyst component (A) are titanium tetrahalides, alkoxytitanium halides, aryloxytitanium halides, alkoxytitaniums and aryloxytitaniums. the titanium tetrahalides, especially titanium tetrachloride, are more preferred.

Examples of the electron donor that can be used in preparing the titanium catalyst component (A) include oxygen-containing electron donors such as alcohols, phenols, ketones, aldehydes, carboxylic acids, organic or inorganic acid esters, ethers, acid amides and acid anhydrides, and nitrogen-containing electron donors such as ammonia, amines, nitriles and isocyanates.

Specific examples of the electron donors are alcohols having 1 to 18 carbon atoms such as methanol, ethanol, propanol, pentanol, hexanol, octanol, dodecanol, octadecyl alcohol, benzyl alcohol, phenethyl alcohol, cumyl alcohol and isopropylbenzyl alcohol; phenols having 6 to 20 carbon atoms optionally containing a lower alkyl group, such as phenol, cresol, xylenol, ethylphenol, propylphenol, nonylphenol, cumylphenol, and naphthol; ketones having 3 to 15 carbon atoms such as acetone, methylethyl ketone, methylisobutylketone, acetophenone and benzophenone; aldehydes having 2 to 15 carbon atoms such as acetaldehyde, propionaldehyde, octyaldehyde, benzaldehyde, tolualdehyde and naphthoaldehyde; organic acid esters having 2 to 18 carbon atoms such as methyl formate, methyl acetate, ethyl acetate, vinyl acetate, propyl acetate, octyl acetate, cyclohexyl acetate, ethyl propionate, methyl butyrate, ethyl valerate, methyl chloroacetate, ethyl dichloroacetate, methyl methacrylate, ethyl crotonate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluate, ethyl toluate, amyl toluate, ethyl ethylbenzoate, methyl anisate, ethyl anisate, ethyl ethoxybenzoate, γ-butyrolactone, δ-valerolactone, coumarine, and phthalide; inorganic acid esters such as ethyl silicate; acid halides such as acetyl chloride, benzoyl chloride, toluoyl chloride, and anisoyl chloride; ethers having 2 to 20 carbon atoms such as methyl ether, ethyl ether is isopropyl ether, butyl ether, amyl ether, tetrahydrofuran, anisole and diphenyl ether; acid amides such as acetamide, benzamide and toluamide; amines such as methylamine, ethylamine, diethylamine, tributylamine, piperidine, tribenzylamine, aniline, pyridine, picoline, and tetramethylethylenediamine; and nitriles such as acetonitrile, benzonitrile and tolunitrile. These electron donors may be used singly or as a mixture of two or more.

Electron donors desirably contained in the solid titanium catalyst component (A) are those having no active hydrogen, such as organic or inorganic acid esters, ethers, ketones, tertiary amines, acid halides and acid anhydrides. The organic acid esters and ethers are preferred, and aromatic carboxylic acid esters or alkyl-containing ethers are most preferred. Examples of suitable aromatic carboxylic acid esters are those having 8 to 18 carbon atoms, particularly lower alkyl esters of benzoic acid, lower alkylbenzoic acids, and lower alkoxybenzoic acids. The term "lower", as used herein, means that the number of carbon atoms is 1 to 4, preferably 1 or 2. Suitable alkyl-containing ethers are ethers having 4 to 20 carbon atoms, such as diisoamyl ether and dibutyl ether.

Compounds containing one Al-carbon bond at least in the molecule may be used as the organoaluminum compound (B). For example, they may be (i) organoaluminum compounds of the general formula $R^1_mAl(OR^2)_nH_pX_q$ wherein $R^1$ and $R^2$ are identical or different and represent a hydrocarbon groups usually containing 1 to 15 carbon atoms, preferably 1 to 4 carbon atoms, for example an alkyl, aryl, alkenyl or cycloalkyl group, X is a halogen, m is a number represented by $0<m\leqq3$, n is a number represented by $0\leqq n<3$, p is a number represented by $0\leqq p<3$, and q is a number represented by $0\leqq q<3$, provided that

$m+n+p+q=3$; and (ii) complex alkylated products of metals of Group I and aluminum, represented by the general formula $M^1AlR^1_4$ wherein $M^1$ represents Li, Na or K, and $R^1$ is the same as defined above.

The organoaluminum compounds of type (i) above include, for example, compounds of the general formula $R^1_mAl(OR^2)_{3-m}$ wherein $R^1$ and $R^2$ are the same as defined above, and m is a number preferably represented by $1.5 \leqq m \leqq 3$; compounds of generaly formula $R^1_mAlX_{3-m}$ wherein $R^1$ is as defined above, X is halogen, and m is preferably $0<m<3$; compounds of the general formula $R^1_mAlH_{3-m}$ wherein $R^1$ is as defined above, and m is preferably $2 \leqq m<3$; and compounds of the general formula $R^1_mAl(OR^2)_nX_q$ wherein $R^1$ and $R^2$ are as defined above, X is halogen, $0<m \leqq 3$, $0 \leqq n<3$, $0 \leqq q<3$, and $m+n+q=3$.

Specific examples of the aluminum compounds of type (i) are trialkyl aluminums such as triethyl aluminum and tributyl aluminum; trialkenyl aluminums such as triisoprenyl aluminum; partially alkoxylated alkyl aluminums, for example, dialkyl aluminum alkoxides such as diethyl aluminum ethoxide and dibutyl aluminum butoxide; alkyl aluminum sesquialkoxides such as ethyl aluminum sesquiethoxide and butyl aluminum sesquibutoxide; compounds having the average composition such as $R^1_{2.5}Al(OR^2)_{0.5}$; partially halogenated alkyl aluminums, for example, dialkyl aluminum halides such as diethyl aluminum chloride, dibutyl aluminum chloride and diethyl aluminum bromide; alkyl aluminum sesquihalides such as ethyl aluminum sesquichloride, butyl aluminum sesquichloride and ethyl aluminum sesquibromide; alkyl aluminum dihalides such as ethyl aluminum dichloride, propyl aluminum dichloride and butyl aluminum bromide; partially hydrogenated alkyl aluminums, for example, dialkyl aluminum hydrides such as diethyl aluminum hydride and dibutyl aluminum hydride; alkyl aluminum dihydrides such as ethyl aluminum dihydride and propyl aluminum dihydride; and partially alkoxylated and halogenated alkyl aluminums such as ethyl aluminium ethoxychloride, butyl aluminum butoxychloride and ethyl aluminum ethoxybromide. Organoaluminum compounds in which two or more aluminum atoms are bonded through an oxygen or nitrogen atom may also be used as the compounds of type (i). Examples include

$(C_2H_5)_2AlOAl(C_2H_5)_2$, $(C_4H_9)_2AlOAl(C_4H_9)_2$, and

$(C_2H_5)_2AlNAl(C_2H_5)_2$.
$|$
$C_6H_5$

Examples of the compounds of type (ii) are $LiAl(C_2H_5)_4$ and $LiAl(C_7H_{15})_4$.

Among these organoaluminum compounds, the trialkyl aluminums or mixtures of the trialkyl aluminums and alkyl aluminum halides or aluminum halides are preferred.

As the electron donor component (C), organic or inorganic acid esters, ethers, ketones, tertiary amines, acid halides and acid anhydrides can be suitably used. The organic acid esters, above all aromatic carboxylic acid esters, are preferred. Typical examples of the aromatic carboxylic acid esters are those having 8 to 18 carbon atoms, and esters of benzoic acid, lower alkylbenzoic acids and lower alkoxybenzoic acids are preferred. Specific examples of these electron donors may be the same as those given hereinabove with regard to the electron donors which can be used in preparing the solid titanium catalyst component (A). The electron donor (C) may be complexed with the organoaluminum compound, or with a Lewis acid such as aluminum chloride.

In step (I) of the process of this invention, a polymer of propylene or a polymer consisting of a major proportion of propylene and up to 5 moles % of another olefin is formed by using a catalyst composed of the aforesaid components (A), (B) and (C), preferably in a liquid phase containing at least 50% by weight, preferably at least 70% by weight, more preferably at least 90% by weight, of propylene. The highly active solid titanium catalyst component (A) may be used after it has been used to preliminarily polymerize a small amount of propylene in the presence of a part or the whole of the component (B) and if required in the further presence of a part or the whole of the component (C). The preliminary polymerization need not be carried out in a propylene-rich phase liquid phase, and for example, may be carried out in a liquid phase containing mainly an inert hydrocarbon.

By using the liquid phase containing a major proportion of propylene, the liquid phase is easy to remove by flashing after the polymerization, and it is possible to switch over to the gas-phase polymerization in step (11) without any trouble. This also brings about the advantage that the operation of purifying the solvent as in usual slurry polymerization can be omitted. From the above viewpoint, easily volatilizable hydrocarbons such as propane or butane are preferred as another medium which may be present in the liquid phase in addition to propylene. Inert hydrocarbons having 5 to 20 carbon atoms, such as pentane, hexane and heptane, can also be used. The amount of these hydrocarbons should, however, be preferably limited to not more than 35% based on the entire liquid phase.

In the suspension-polymerization step (I), polypropylene or a polymer consisting mainly of propylene is produced. Usually homopolymerization of propylene is carried out. If desired, however, propylene may be copolymerized with up to 5 mole%, preferably up to 2 mole%, of another olefin, such as ethylene or an α-olefin having at least 4 carbon atoms.

The proportions of the catalyst components (B) and (C) in step (I) in the process of this invention should be such that the ratio of gram atoms of Al in component (B) to moles of the electron donor in component (C) is from 1:1 to 15:1, preferably from 1.5:1 to 10:1. If this ratio falls outside the above range, it is difficult to

maintain a desired catalyst performance in regard to activity and stereospecificity, and troubles occur in the production and quality of the propylene-containing block copolymer.

Since it is industrailly advantageous to maintain the final concentration of the polymer slurry obtained in step (I) at 50 to 500 g/liter, the amount of the component (A) in step (I) is preferably 0.001 to 0.1 millimole/liter, especially preferably 0.005 to 0.1 millimole/liter, calculated as titanium, although it varies slightly depending upon the activity of the catalyst component. The proportions of the components (A) and (B) used are such that the Al/Ti atomic ratio is 10:1 to 1000:1, especially 15:1 to 500:1, and the concentration of the component (B) is from 0.1 to 50 millimoles/liter.

The polymerization in step (I) may be performed in two or more stages and the amounts of the components (B) and (C) may be different for the individual stages within the above specified range.

Preferably, the suspension polymerization step (I) should be performed such that at least 500 g, preferably at least 8000 g, more preferably at least 10000 g, of polypropylene or a polymer consisting predominantly of propylene is formed per millimole of titanium. This ensures the formation of a polymer having good flowability and a suitable particle diameter and particle size distribution. Accordingly, the gaseous-phase polymerization in step (II) can be performed more smoothly. Furthermore, even when a deashing treatment is omitted, a block copolymer having practical applicability can be obtained.

Preferably, the suspension polymerization step (I) is carried out such that it yields at least 5000 g, per millimole of titanium, of a propylene polymer which has a boiling n-heptane insoluble portion of at least 90% by weight, more preferably at least 92% by weight, especially preferably at least 93% by weight, and an n-decane soluble portion content at 23°C of not more than 5% by weight, more preferably not more than 4% by weight. If the resulting block polymer has a boiling n-heptane insoluble portion content within the above-specified range but an n-decane soluble portion content at 23°C larger than the above-specified range, it is sometimes difficult to obtain high rigidity and strength. Accordingly, the reaction in step (I) should preferably be carried out so that a propylene polymer specified above may be formed.

In order to obtain polypropylene or a polymer consisting predominantly of propylene having an average particle diameter and a particle size distribution within the above ranges and the aforesaid properties in the desired yields, the step (I) may be carried out by using the titanium catalyst component (A) obtained by the methods exemplified hereinabove and by suitably selecting and controlling the type of the electron donor, the ratio between the components (B) and (C), the polymerization temperature. Such a choice and control can be easily determined experimentally.

The polymerization temperature in the suspension polymerization step (I) is, for example, 50 to 100°C, preferably 50 to 90°C, and the polymerization pressure may be the one under which propylene can be maintained liquid in the desired concentration. Although varying depending upon the polymerization temperature, the polymerization pressure may, for example, be 15 to 100 $kg/cm^2$-G, preferably 15 to 60 $kg/cm^2$/G.

The molecular weight of polypropylene or a polymer consisting predominantly of propylene obtained in the suspension polymerization step (I) can be properly selected depending upon the intended uses of the final propylene-containing block copolymer whose requirements range variously from processability to high strength. For example, it is preferably obtained in an intrinsic viscosity [η], measured in decalin at 135°C, of 0.8 to 5 dl/g, particularly 1 to 4 dl/g. In order to obtain a polymer of the desired molecular weight, it is most desirable to perform the reaction in the presence of a suitable amount of hydrogen as a molecular weight controlling agent.

Preferably, a part or the whole of the liquid phase is removed by, for example, flashing, from the polymer slurry obtained in the suspension-polymerizing step (I) before it is submitted to the gas-phase polymerization step (II) in which propylene is copolymerized with at least one other olefin such as ethylene and/or an α-olefin having at least 4 carbon atoms. Alternatively, the polymer slurry may be directly sent to the gas-phase polymerization zone where the gas-phase copolymerization is carried out while evaporating the liquid phase of the polymer slurry by flashing. Or before and/or after the performance of the gas-phase copolymerization step (II), an additional step may be provided in which a small proportion of polypropylene or a copolymer consisting mainly of propylene, or polyethylene or a copolymer consisting mainly of ethylene, is produced in the gaseous phase. Such an additional step may be performed in a manner substantially in accordance with the gaseous-phase copolymerization in step (II) and comprises homopolymerizing propylene in the gaseous phase (optionally with not more than 5 mole% of ethylene), and/or homopolymerizing ethylene in the gaseous phase (optionally with not more than 10 mole% of propylene).

In the gaseous-phase copolymerization step (II), the copolymerization in the gaseous phase can be performed in the presence of the active catalyst-containing propylene polymer obtained in step (I) and hydrogen while excercising control so that the content of propylene in a portion soluble in n-decane at 23°C of the block copolymer and its intrinsic viscosity attain suitable values. Preferably, the gaseous-phase copolymerizing step (II) is carried out while fluidizing the polymer particles and keeping them in good contact with a gaseous olefin. For this purpose, it is preferred to use a fluidized bed reactor, a stirred fluidized bed reactor, a stirred bed reactor, or a loop reactor. By using the specified solid titanium catalyst component (A) under a combination of the parameter (i) described above and the parameter (ii) to be described in detail below, there can be easily obtained a block copolymer of the desired properties having good flowability even when using these various reactors. In addition, this can be achieved without any

likelihood of tackiness resulting from the formation of rubber of non-uniform polymerization, and the process can be operated continuously for a prolonged period of time.

Examples of the other olefin used in copolymerization with propylene include ethylene, 1-butene, 1-hexene, 1-octene, 1-decene and 4-methyl-1-pentene, either alone or as mixtures. Ethylene is most preferred.

In the gas-phase copolymerization step (II), gaseous propylene and the above-exemplified olefin are contacted with the catalyst-containing propylene polymer obtained in step (I). At this time, by causing the component (B) or both components (B) and (C) and preferably hydrogen to be present together, the intrinsic viscosity of the n-decane-soluble portion at 23°C of the block copolymer is adjusted preferably to 1.8 to 6, especially preferably to 1.8 to 4 dl/g. This leads to a copolymer of having a high bulk density and good flowability in the gaseous phase polymerization step (II), and to a final block copolymer product having high strength.

Such additional amounts of component (B) or both components (B) and (C) are freshly added after the amount of the polymer formed in step (I) reaches 70% of that of the polymer finally obtained in step (I). The amount of the freshly added component (B) or both components (B) and (C) is such that the ratio of gram atoms of Al freshly added to the total number of moles of electron donor [the total of the component (C) and the added donor electron] is from 0.1:1 to 20:1. Preferably, component (B) or both components (B) and (C) are added at any time after the end of the suspension-polymerization step (I) to the beginning of the step (II). When a flashing step is provided before the gas-phase copolymerization step (II), they may be added during the flashing step. Alternatively, they may be added after the flashing step but before the step (II). If the suspension-polymerization step (I) is carried out in two or more stages, the polymerization in step (I) is carried out in a pre-stage wherein at least 70% of a polymer consisting mainly of propylene is produced and a post-stage wherein not more than 30% of the polymer is produced, and the organoaluminum compound (B) or the components (B) and (C) may be added in the post-stage. Or the organoaluminum compound (B) or the component (C) may be added in two or more portions.

Organoaluminum compounds (B) to be additionally supplied are preferably trialkyl aluminums or mixtures thereof with alkyl aluminum halides, and the trialkyl aluminums are especially preferred. The amounts of component (B) or both components (B) and (C) are such that the ratio of gram atoms of Al freshly added to the total number of moles of electron donor is from 0.1:1 to 20:1, preferably from 0.1:1 to 10:1. If the amounts of these components are larger than the specified range, the molecular weight of the copolymer obtained in the step (II) decreases, and its strength is reduced. Moreover, the product may adhere to the reactor wall or is difficult to discharge, and it is difficult to perform operation stably and continuously in stable condition. If the amounts are less than the aforesaid ranges or no organoaluminum compound is freshly supplied, it is difficult to obtain the desired amount of a final propylene-containing block copolymer having the desired molecular weight.

In order to perform the copolymerization in step (II) so as to adjust the molecular weight (intrinsic viscosity) of the n-decane-soluble portion of the block copolymer to the desired value, it is especially preferred to use hydrogen as well as the freshly added component (B) or both components (B) and (C). By the addition of component (B) or both components (B) and (C) alone, the tackiness of the polymer will increase and may result in reduced flowability, etc. Hydrogen used here may be that portion of hydrogen which was not consumed in step (I), or may be freshly added.

The content of propylene in a portion soluble in n-decane at 23°C of the final block copolymer is preferably 20 to 80 mole%, more preferably 25 to 75 mole%, and the amount of the propylene-containing copolymer formed in step (II) is preferably 2 to 35% by weight, especially 5 to 25% by weight, of the final block copolymer.

In the gas-phase copolymerization step (II), the copolymerization temperature is, for example, 50 to 90°C, preferably 50 to 80°C.

In practising the present invention, the gas-phase copolymerization may be a final polymerization step. Or if desired, as stated hereinabove, a step of polymerizing an olefin preferably ethylene as a main monomer may be attached. Specifically, if desired, gaseous ethylene or ethylene and a minor proportion of another olefin are contacted in the presence of the catalyst-containing copolymer composition obtained in the previous step and if desired in the copresence of hydrogen and/or a freshly added organoaluminum compound to form polyethylene or an ethylene copolymer containing at least 90 mol% of ethylene. The polymerization temperature in this step is, for example, 50 to 90°C, particularly 50 to 80°C.

The block copolymer in accordance with this invention obtained by the process described hereinabove is a powder having a reduced ash content and good flowability. Accordingly, it can be offered to the market only by separating the copolymer from the unreacted olefins without performing a deashing treatment. If desired, it may of course be pelletized. A desirable block copolymer according to this invention comprises 60 to 90% by weight, particularly 70 to 90% by weight, of a propylene polymer formed in step (I) and 3 to 40% by weight, especially 5 to 35% by weight of a copolymer obtained in the gas-phase polymerization step (II), and 0 to 30% by weight, particularly 2 to 40% by weight, of a polymer composed mainly of ethylene. Preferably, the propylene content of the block copolymer is 60 mole% to 96 mole%, particularly 70 mole% to 95 mole%.

Since according to this invention, a block copolymer having excellent gloss, strength and rigidity in a

well balanced combination can be obtained stably in good yields by a stable operation, the process of this invention is most suitable for continuous long-term operation.

The following examples illustrate the present invention more specifically.

The impact strength was measured in accordance with ASTM D1709-62T; the surface gloss, in accordance with ASTM D523-62T; and the flexural modulus, in accordance with D790-66T.

The composition, intrinsic viscosity and amount of the copolymer were measured by using a sample obtained by dissolving the polymer in n-decane, cooling the solution to 23°C, removing the precipitated polymer, and recovering the soluble portion by precipitation with acetone. The proportion of ethylene in the copolymer was determined by $^{13}C$ NMR.

Example 1

Preparation of a titanium catalyst component:—

95.3 g of commercially available magnesium chloride (water content 0.2%), 488 ml of n-decane and 464.5 ml of 2-ethylhexanol were reacted at 130°C for 2 hours to form a uniform solution, followed by adding 22.88 ml of ethyl benzoate. The uniform solution was added dropwise with stirring over the course of 20 minutes to 4 liters of titanium tetrachloride kept at −20°C, and the mixture was stirred at −20°C for 1 hour. The mixture was gradually heated, and after the temperature reached 80°C, 48.6 ml of ethyl benzoate was further added. The mixture was stirred at 80°C for 2 hours. The resulting solid substance was collected by filtration, and again suspended in 4 liters of titanium tetrachloride. The mixture was stirred at 90°C for 2 hours. The solid substance was collected by filtration, and fully washed with purified hexane until no free titanium compound was detected in the washing. The resulting titanium catalyst component contained 3.6% by weight of titanium, 59.0% by weight of chlorine, 17.0% by weight of magnesium and 15.0% by weight of ethyl benzoate. It had a specific surface area of 230 $m^2/g$, an average particle diameter of 13 μm, and a σ g of 1.13. One hundred grams of the titanium catalyst component was suspended in 4 liters of hexane, and 75.16 millimoles of triethyl aluminum and 25.05 millimoles of methyl p-toluate are added. Propylene was added so that 300 of propylene was polymerized at 25°C.

Polymerization:—

Continuous block copolymerization was carried out using a polymerization apparatus consisting of polymerization tanks A, B, and C connected in series and an evaporation tank E located between the tanks B and C (respectively having a capacity of 50 liters, 50 liters, 60 liters, and 55 liters; the tank C was fluidized bed reactor). The polymerization tank A was charged with the aforesaid hexane suspension of the titanium catalyst component and triethyl aluminum, a hexane solution of methyl p-toluate, hydrogen and liquefied propylene under the conditions shown in Table 1. After polymerizing propylene in the tanks A and B, the polymer slurry was sent to the evaporation tank to evaporate the unreacted propylene to form polypropylene powder in the substantially dried condition. The polypropylene powder was sent to the polymerization tank C, and a gaseous mixture of ethylene and propylene was continuously polymerized under the conditions shown in Table 1. The resulting block copolymer had an MI of 3.21, an ethylene content of 10.1 mole%, and a titanium content of 2.6 ppm. The polymer discharged from the tank B was partly sampled, and analyzed. It was found to have an MI of 4.26, a bulk density of 0.48 g/ml, a boiling n-heptane extraction residue of 97.0%, an n-decane-soluble portion content of 1.2% by weight, and a titanium content of 2.8 ppm. An antioxidant was added to the resulting block copolymer, and specimens were prepared for measurement of flexural modulus, falling dart impact strength and gloss. It was found to have a flexural modulus of 14,500 $kg/cm^2$, an impact strength $FD^{-10°C}$ of 185 kg-cm and a gloss of 55. The amount of that portion of the block copolymer which was extracted with n-decane at 23°C was 10.3% by weight, and the decane-extracted portion had an ethylene content of 49 mole% and an intrinsic viscosity of 3.5.

TABLE 1

| | A | B | C |
|---|---|---|---|
| Polymerization temperature (°C) | 70 | 68 | 60 |
| Polymerization pressure ($kg/cm^2$) | 32 | 30 | 15 |
| Partial pressure of hydrogen ($kg/cm^2$) | 0.3 | — | 0.4 |
| Average residence time (hr) | 1.0 | 1.0 | 1.0 |
| Amount of propylene fed (kg/hr) | 13.1 | — | 0.88 |
| Amount of Ti catalyst fed (mmoles/hr) | 0.375 | — | — |
| Amount of $AlEt_3$ fed (mmoles/hr) | 15 | — | 4 |
| Methyl p-toluate (mmoles/hr) | 3.75 | — | 0.25 |
| Concentration of ethylene (mole%) | — | — | 60 |
| Concentration of propylene (mole%) | | | 40 |
| Amount of polymer formed (kg/hr) | 6.38 | | 0.75 |

Example 2

Example 1 was repeated except that the polymerization conditions were changed as shown in Table 2. The results are shown in Table 3.

TABLE 2

| | Example 2 | |
|---|---|---|
| | A | C |
| Polymerization pressure ($kg/cm^2$) | 34 | 15 |
| Partial pressure of $H_2$ ($kg/cm^2$) | 5.6 | 0.2 |
| Amount of propylene fed (kg/hr) | 13.1 | 1.43 |
| Amount of $Al\text{-}i\text{-}Bu_3$ added (mmole/hr) | 12.5 | 7.5 |
| Amount of $AlEt_{1.5}Cl_{1.5}$ fed (mmoles/hr) | 6.25 | — |
| Amount of ethyl benzoate fed (mmoles/hr) | 3.75 | — |
| Concentration of ethylene (mole%) | — | 50 |
| Concentration of propylene (mole%) | | 50 |
| Amount of the polymer formed (kg/hr) | 6.38 | 1.13 |

TABLE 3

| | Example 2 |
|---|---|
| Tank B | |
| MI (g/10′) | 55.1 |
| Ti content (ppm) | 2.8 |
| Boiling n-heptane extraction residue (wt%) | 95.2 |
| Amount extracted with n-decane (wt.%) | 2.1 |
| Bulk density (g/ml) | 0.46 |
| Product | |
| MI (g/10′) | 22.5 |
| Ethylene content (mole%) | 12.4 |
| Bulk density (g/ml) | 0.47 |
| Amount extracted with n-decane (wt.%) | 8.9 |
| Intrinsic viscosity [η] | 2.47 |
| Ethylene content (mole%) | 41 |
| Ti content (ppm) | 2.4 |
| Falling dart impact strength (−10°C) (kg/cm) | 153 |
| Flexural modulus ($kg/cm^2$) | 14200 |
| Gloss | 49.0 |

Comparative Example 1

Example 1 was repeated except that the polymerization conditions were changed as shown in Table 4. The results are shown in Table 5.

TABLE 4

| | Comparative Example 1 | |
|---|---|---|
| | A | C |
| Polymerization pressure ($kg/cm^2$) | 32 | 15 |
| Partial pressure of hydrogen ($kg/cm^2$) | 0.3 | — |
| Amount of propylene fed (kg/hr) | 13.1 | 0.9 |
| Amount of Al-i-$Bu_3$ fed (mmole/hr) | 15 | 190 |
| Amount of methyl p-toluate fed (mmole/hr) | 3.75 | — |
| Concentration of ethylene (mole%) | — | 50 |
| Concentration of propylene (mole%) | | 50 |
| Amount of polymer (kg/hr) | 6.38 | 0.71 |

TABLE 5

| | Comparative Example 1 |
|---|---|
| Tank B | |
| MI (g/10′) | 4.85 |
| Ti content (ppm) | 2.8 |
| Boiling n-heptane extraction residue (wt.%) | 96.2 |
| Amount extracted with n-decane (wt.%) | 2.6 |
| Bulk density (g/ml) | 0.45 |
| Product | |
| MI (g/10′) | 3.85 |
| Ethylene content (mole%) | 9.9 |
| Bulk density (g/ml) | 0.45 |
| Amount extracted with n-decane (wt.%) | 15.0 |
| Intrinsic viscosity [η] | 0.97 |
| Ethylene content (mole%) | 32 |
| Ti content (ppm) | 2.5 |
| Falling dart impact strength (−10°C) (kg-cm) | less than 40 |
| Flexural modulus ($kg/cm^2$) | 12600 |
| Gloss | 53.0 |

Example 3

Preparation of a Ti catalyst:—

Three liters of $TiCl_4$ was added to a 5-liter reactor, and 150 g (n-decane suspension of the spherical $MgCl_2 \cdot 3EtOH$ was added at room temperature. Then, 36.8 ml of ethyl benzoate was added, and the mixture was stirred at room temperature for 1 hour. The mixture was heated to 100°C, and stirred at this temperature for 1.5 hours. The supernatant liquid was removed by sedimentation, and 3 liters of $TiCl_4$ was freshly added. The mixture was stirred at 110°C for 2 hours, and the supernatant liquid was removed by sedimentation. The solid portion was washed with a fresh supply of hexane repeatedly until no free titanium compound was detected in the hexane.

The resulting solid product contained 3.8% by weight of Ti, 61.0% by weight of chlorine, 20.0% by weight of Mg and 11.8% by weight of ethyl benzoate per gram of the solid. The solid component had a specific surface area of 221 $m^2/g$, and an average particle diameter of 30 μms and a σg of 1.66, and was spherical in shape.

Fifty grams of the titanium catalyst component obtained was suspended in 2 liters of hexane, and 40 millimoles of triethyl aluminum and 13.3 millimoles of methyl p-toluate were added. Propylene was added so that 150 g of propylene was polymerized at 25°C.

Polymerization:—

Polymerization was carried out in the same way as in Example 2 except that the polymerization conditions were changed as shown in Table 6.

TABLE 6

| | A | B | C |
|---|---|---|---|
| Polymerization temperature (°C) | 80 | 80 | 60 |
| Polymerization pressure ($kg/cm^2$) | 41 | 41 | 15 |
| Partial pressure of hydrogen ($kg/cm^2$) | 0.9 | — | 0.2 |
| Amount of propylene fed (kg/hr) | 11.5 | — | 1.9 |
| $AlEt_3$ (mmoles/hr) | 20.0 | — | 5.63 |
| $AlEt_{1.5}Cl_{1.5}$ (mmoles/hr) | 10.0 | — | — |
| Methyl p-toluate (mmoles/hr) | 7.5 | — | — |
| Concentration of ethylene (mole%) | — | — | 60 |
| Concentration of propylene (mole%) | — | — | 40 |
| Amount of polymer formed (kg/hr) | 6.0 | | 1.5 |

After discharge from the tank C, the resulting block copolymer was treated with steam, and dried. The block copolymer had an MI of 1.08, an ethylene content of 14.8 mole%, and a bulk density of 0.44 g/ml. The amount of the copolymer extracted with n-decane was 18.1% by weight, and the n-decane-soluble portion had an intrinsic viscosity of 3.0 and an ethylene content of 49 mole%.

The block copolymer had a falling dart impact strength at −10°C of 210 kg-cm, a flexural modulus of 12,000 $kg/cm^2$, and a gloss of 52%.

The polymer from the tank B was analyzed and found to have a Ti content of 3 ppm, a bulk density of 9.48 g/ml, an MI of 2.18, a boiling n-heptane extraction residue of 97.2% and an n-decane-soluble portion content of 2.0% by weight.

Example 4

Using the catalyst of Example 1, propylene was homopolymerized under the conditions of Example 1, propylene and ethylene were copolymerized in the tank C. Then, ethylene as a main monomer was polymerized in the tank D (fluidized bed having an inner capacity of 55 liters). The conditions for this multi-step polymerization process were as shown in Table 7.

The polymer discharged from the tank D was analyzed, and found to have an MI of 2.7 g/10′, an ethylene content of 15.4 mole%, an n-decane-soluble portion content of 12.0% by weight. The n-decane-soluble portion had an intrinsic viscosity of 2.95 and an ethylene content of 36% by weight. The polymer had a flexural modulus of 13,800 $kg/cm^2$, a falling dart impact strength at −10°C of 195 kg-cm and a gloss of 58.

TABLE 7

| | C | D |
|---|---|---|
| Polymerization temperature (°C) | 60 | 70 |
| Polymerization pressure ($kg/cm^2$) | 15 | 8 |
| Partial hydrogen pressure ($kg/cm^2$) | 0.25 | 0.1 |
| Average residence time (hours) | 1 | 1 |
| Amount of ethylene fed (kg/hr) | 0.69 | 0.52 |
| Amount of $AlEt_3$ fed (mmoles/hr) | 4 | 4 |
| Concentration of ethylene (mole%) | 35 | 98 |
| Concentration of propylene (mole%) | 65 | 2 |
| Amount of the polymer formed (kg/hr) | 1.20 | 0.40 |

Comparative Example 2

In the polymerization in tank A in Example 1, the polymerization was performed in the same way except that the amount of Ti fed was changed to 0.0375 millimole/hr, and the amount of methyl p-toluate fed was changed to 0.6 millimole/hr. The polymerization in tank C was performed under the conditions shown in Table 8. Agglomeration of the polymer occurred in tank B, and the polymer adhered to the tank wall, making it difficult to continue operation.

TABLE 8

| | Tank C |
|---|---|
| Amount of propylene fed (kg/hr) | 0.22 |
| Amount of $AlEt_3$ fed (mmoles/hr) | 3.75 |
| Methyl p-toluate fed (mmoles/hr) | — |
| Amount of the polymer formed (kg/hr) | 0.17 |

The resulting block copolymer had an MI of 5.68, an ethylene content of 10.9 mole%, a titanium content of 1.0 ppm, a flexural modulus of 11,500 $kg/cm^2$ and an impact strength at −10°C of 45 kg-cm. The amount of that portion of the block copolymer which was extracted with n-decane at 23°C was 14.2% by weight, and the n-decane-extracted copolymer had an ethylene content of 41 mole% and an intrinsic viscosity of 0.9.

The polymer discharged from the tank B was partly sampled and analyzed. It was found to have an MI of 7.36, a bulk density of 0.38 g/ml, a boiling n-heptane-extraction residue of 87%, and an n-decane-soluble portion content of 7.5% by weight and a Ti content of 1.2 ppm.

**Claims**

1. A multi-step process for the production of a propylene-containing block copolymer which comprises

(i) polymerizing propylene, either alone or with up to 5 mole% of another olefin, by suspension polymerization in the presence of a catalyst composed of

(A) a highly active solid titanium catalyst component containing magnesium, titanium, halogen and an electron donor as essential ingredients,

(B) an organoaluminum compound, and

(C) an electron donor, and

(II) copolymerizing propylene with at least one olefin by gas-phase polymerization in the presence of the catalyst-containing polymer obtained in step (I);

characterised in that

(i) step (I) is carried out under such conditions that the ratio of gram atoms of Al in catalyst component (B) to moles of the electron donor in the catalyst component (C) is from 1:1 to 15:1, and

(ii) after the amount of the polymer formed in step (I) reaches 70% of that of the polymer finally obtained in step (I), component (B) or both components (B) and (C) are freshly added in such an amount that the ratio of gram atoms of Al freshly added to the total number of moles of electron donor in the polymerization or copolymerization system is from 0.1:1 to 20:1, and thereafter the polymerization or copolymerization is carried out in the further presence of the component (B) or the components (B) and (C) so added.

2. A process according to claim 1 wherein the average particle size of the solid titanium catalyst component (A) is 1 to 200 µm, and the geometrical standard deviation (σg) of the particle size distribution of the component (A) is less than 2.1.

3. A process according to claim 1 or 2 wherein the suspension-polymerization of step (I) is carried out under such conditions that the amount of propylene in the liquid phase of the polymerization system is not less than 50% by weight based on the weight of the liquid phase.

4. A process according to claim 1, 2 or 3 wherein the suspension polymerization of step (I) is carried out such that it yields at least 5000 g, per millimole of titanium, of a propylene polymer having a boiling n-heptane-insoluble portion content of at least 90% by weight and an n-decane-soluble portion content at 23°C of at most 5% by weight.

5. A process according to any one of the preceding claims wherein the gas-phase copolymerization of step (II) is carried out such that it yields a propylene-containing block copolymer having an intrinsic viscosity, measured at 135°C in decalin, of 1.8 to 6, dl/g of which the n-decane-soluble portion at 23°C has a propylene content of 20 mole% to 80 mole%.

6. A process according to any one of the preceding claims wherein the propylene-containing block copolymer has a propylene content of 60 to 96 mole%.

7. A process according to any one of the preceding claims wherein the gas-phase copolymerization of step (II) is carried out in the presence of hydrogen.

8. A process according to any one of the preceding claims wherein in the solid titanium catalyst component (A) the atomic ratio of Mg/Ti is from 2:1 to 100:1, the atomic ratio of halogen/Ti is from 4:1 to 100:1, and the mole ratio of the electron donor to Ti is from 0.2:1 to 10:1.

9. A process according to any one of the preceding claims wherein the electron donor in the solid titanium catalyst component (A) is an organic acid ester.

10. A process according to any one of the preceding claims wherein the electron donor (C) is an organic acid ester.

11. A process according to any one of the preceding claims wherein step (I) and/or step (II) is carried out in at least two stages.

12. A process according to any one of the preceding claims wherein a step of homopolymerizing propylene in the gaseous phase, and/or a step of homopolymerizing ethylene in the gaseous phase is included before and/or after step (II).

**Revendications**

1. Procédé à plusieurs stades pour la préparation d'un copolymère séquencé contenant du propylène, qui consiste:

(I) à polymériser le propylène, soit seul, soit avec 5% en mole d'une autre oléfine, par polymérisation en suspension en présence d'un catalyseur constitué par

(A) un constituant catalytique solide au titane, fortement actif, contentant du magnésium, du titane, un halogène et un donneur d'électrons comme ingrédients essentiels,

(B) un composé organo-aluminium, et

(C) un donneur d'électron, et

(II) à copolymériser le propylène avec au moins une oléfine par polymérisation en phase gazeuse en présence du polymère contenant le catalyseur obtenu dans le stade (I); caractérisé par le fait que

(i) le stade (I) est effectué dans des conditions telles, que le rapport des atomes-grammes d'aluminium dans le constituant catalytique (B) aux moles du donneur d'électrons dans le constituant catalytique (C) est compris entre 1:1 et 15:1; et

(ii) une fois que la quantité du polymère formé dans le stade (I) atteint 70% de la quantité du polymère finalement obtenu dans le stade (I), le constituant (B) ou les deux constituants (B) et (C) sont ajoutés à l'état fraîchement préparé en une quantité telle, que le rapport des atomes-grammes d'aluminium ajoutés fraîchement préparés au nombre total de moles de donneur d'électrons dans le système de polymérisation ou de copolymérisation est compris entre 0,1:1 et 20:1, puis la polymérisation ou la copolymérisation est effectuée encore en présence du constituant (B) ou des constituants (B) et (C) ainsi ajoutés.

2. Procédé selon la revendication 1, dans lequel la granulométrie moyenne du constituant catalytique solide au titane (A) est de 1 à 200 µm, et l'écart type géométrique (σg) de la répartition granulométrique du constituant (A) est inférieur à 2,1.

3. Procédé selon la revendication 1 ou 2, dans lequel la polymérisation en suspension du stade (I) est effectuée dans des conditions telles, que la quantité de propylène dans la phase liquide du système de polymérisation est au minimum de 50% en poids par rapport au poids de la phase liquide.

4. Procédé selon la revendication 1, 2 ou 3, dans lequel la polymérisation en suspension du stade (I) est effectuée du façon à ce qu'elle donne au moins 5000 g, par millimole de titane, d'un polymère de propylène contenant au minimum 90% en poids d'une partie insoluble dans le n-heptane bouillant et au maximum 5% en poids d'une partie soluble dans le n-décane à 23°C.

5. Procédé selon l'une quelconque des revendications précédentes, dans lequel la copolymérisation en phase gazeuse du stade (II) est effectuée de façon à ce qu'elle donne un copolymère séquencé contenant du propylène ayant une viscosité intrinsèque, mesurée à 135°C dans la décaline, de 1,8 à 6 dl/g et dont la partie soluble dans le n-décane à 23°C contient en mole 20% à 80% de propylène.

6. Procédé selon l'une quelconque des revendications précédentes, dans lequel le copolymère séquencé contenant du propylène contient en mole 60 à 96% de propylène.

7. Procédé selon l'une quelconque des revendications précédentes, dans lequel la copolymérisation en phase gazeuse du stade (II) est effectuée en présence d'hydrogène.

8. Procédé selon l'une quelconque des revendications précédentes, dans lequel dans le constituant catalytique solide au titane (A), le rapport atomique de Mg/Ti est compris entre 2:1 et 100:1, le rapport atomique de halogène/Ti est compris entre 4:1 et 100:1 et le rapport molaire du donneur d'électrons à Ti est compris entre 0,2:1 et 10:1.

9. Procédé selon l'une quelconque des revendications précédentes, dans lequel le donneur d'électrons dans le constituant catalytique solide au titane (A) est un ester d'acide organique.

10. Procédé selon l'une quelconque des revendications précédentes, dans lequel le donneur d'électrons (C) est un ester d'acide organique.

11. Procédé selon l'une quelconque des revendications précédentes, dans lequel le stade (I) et/ou le stade (II) sont effectués au minimum en deux étapes.

12. Procédé selon l'une quelconque des revendications précédentes, dans lequel un stade d'homopolymérisation du propylène dans la phase gazeuse, et/ou un stade d'homopolymérisation de l'éthylène dans la phase gazeuse sont prévus avant et/ou aprés le stade (II).

**Patentansprüche**

1. Mehrstufiges Verfahren zur Herstellung eines Propylen ehthaltenden Blockcpolymeren, bei dem (I) Propylen entweder allein oder mit bis zu 5 Mol-% eines anderen Olefins mittels Suspensionspolymerisation in Gegenwart eines Katalysators polymerisiert wird, der zusammengesetzt ist aus

(A) einer hochaktiven festen Titankatalysatorkomponente, enthaltend Magnesium, Titan, Halogen und einen Elektronendonor als wesentliche Bestandteile

(B) einer aluminiumorganischen Verbindung und

(C) einem Elektronendonor, und

(II) Propylen mit mindestens einem (anderen) Olefin mittels Gasphasenpolymerisation in Gegenwart des Katalysator enthaltenden Polymeren, erhalten in Stufe (I), copolymerisiert wird, dadurch gekennzeichnet, daß

(i) Stufe (I) unter solchen Bedingungen ausgeführt wird, daß das Verhältnis von gAtome Al in der Katalysatorkomponente (B) zu Mole des Elektronendonors in der Katalysatorkomponente (C) 1:1 bis 15:1 beträgt, und

(ii) nachdem die Menge des in Stufe (I) entstandenen Polymeren 70% des abschließend in Stufe (I) erhaltenen Polymeren erreicht hat, Komponente (B) oder beide Komponenten (B) und (C) in solch einer Menge frisch zugegeben werden, daß das Verhältnis von gAtome Al frisch zugesetzt zur Gesamtzahl Mole des Elektronendonors im Polymerisations- oder Copolymerisations-System 0,1:1 bis 20:1 beträgt, und daß darauf die Polymerisation oder Copolymerisation in der weiteren Anwesenheit der so zugesetzten Komponente (B) bzw. der Komponenten (B) und (C) durchgeführt wird.

2. Verfahren nach Anspruch 1, bei dem die mittlere Teilchengröße der festen Titankatalysatorkomponente (A) 1 bis 200 µm und die geometrische Standardabweichung (σg) der Teilchengrößenverteilung der Komponente (A) weniger als 2,1 beträgt.

3. Verfahren nach Anspruch 1 oder 2, bei dem die Suspensionspolymerisation der Stufe (I) unter solchen Bedingungen ausgeführt wird, daß die Menge Propylen in der flüssigen Phase des Polymerisationssystems nicht weniger als 50 Gew.-%, bezogen auf das Gewicht der flüssigen Phase, ausmacht.

4. Verfahren nach Anspruch 1, 2 oder 3, bei dem die Suspensionspolymerisation der Stufe (I) so ausgeführt wird, daß sie mindestens 5000 g je mmol Titan eines Propylenpolymeren mit einem in siedendem n-Heptan unlöslichen Anteil von mindestens 90 Gew.-% und einem bei 23°C in n-Decan löslichen Anteil von höchstens 5 Gew.-%, liefert.

5. Verfahren nach einem der vorangehenden Ansprüche, bei dem die Gasphasencopolymerisation der Stufe (II) so ausgeführt wird, daß sie ein Propylen enthaltendes Blockcopolymer mit einer Intrinsicviskosität, gemessen bei 13°C in Decalin, von 1,8 bis 6 dl/g liefert, dessen in n-Decan bei 23°C löslicher Anteil einen Propylengehalt von 20 bis 80 Mol-% aufweist.

6. Verfahren nach einem der vorangehenden Ansprüche, bei dem das Propylen enthaltende Blockcopolymer einen Propylengehalt von 60 bis 96 Mol-% aufweist.

7. Verfahren nach einem der vorangehenden Ansprüche, bei dem die Gasphasencopolymerisation der Stufe (II) in Gegenwart von Wasserstoff durchgeführt wird.

8. Verfahren nach einem der vorangehenden Ansprüche, bei dem in der festen Titankatalysatorkomponente (A) das Atomverhältnis von Mg/Ti 2:1 bis 100:1, das Atomverhältnis Halogen/Ti 4:1 bis 100:1 und das Mol-Verhältnis von Elektronendonor zu Ti 0,2:1 bis 10:1 beträgt.

9. Verfahren nach einem der vorangehenden Ansprüche, bei dem der Elektronendonor in der festen Titankatalysatorkomponente (A) ein Ester einer organischen Säure ist.

10. Verfahren nach einem der vorangehenden Ansprüche, bei dem der Elektronendonor (C) ein Ester einer organischen Säure ist.

11. Verfahren nach einem der vorangehenden Ansprüche, bei dem Stufe (I) und/oder Stufe (II) in mindestens zwei Schritten ausgeführt wird.

12. Verfahren nach einem der vorangehenden Ansprüche, bei dem eine Stufe der Homopolymerisierung von Propylen in der Gasphase und/oder eine Stufe der Homopolymerisierung von Ethylen in der Gasphase vor und/oder nach Stufe (II) mit eingeschlossen ist.